# EUROPEAN PATENT APPLICATION

(11) **EP 3 872 010 A1**
(43) Date of publication of application: **01.09.2021**
(21) Application number: 19877376.4
(22) Date of filing: 22.10.2019
(51) Int. Cl.: B65G 15/06, B65G 15/08, B65G 19/14, B65G 51/03

(54) **ENCLOSED CONVEYOR**

(30) Priority: 23.10.2018 BR 102018071790
(71) Applicant: TMSA - Tecnologia Em Movimentacao S.A., 91160-310 Porto Alegre - RS (BR)
(72) Inventor: KUCKOSKI, Adriano, 92314-110 Canoas (RS) (BR); KEISERMAN, Edison, 90450-231 Porto Alegre (RS) (BR)
(74) Representative: Inspicos P/S
(86) International application number: PCT/BR2019/000032
(87) International publication number: WO 2020/082142

(57) **Abstract**

**ENCLOSED CONVEYOR.** The present invention refers to an enclosed conveyor (10) for bulk material (100), comprising an enclosure (2) having on its interior a roller (43) capable of supporting a transport portion (31) of a conveyor belt (30) and an air support system capable of supporting a return portion (32) of said conveyor belt (30). Thus, such enclosed conveyor (10) can move bulk material (100) without damaging the transport portion (31) of the conveyor belt (30), due to a higher pressure enforced by an unequal distribution of said material (100) over said transport portion (31), and also reduce the friction between the return portion (32) and a bottom plate (23) of the enclosed conveyor (10), in order to enable the proposed conveyor (10) to be manufactured at a longer length and with a smaller traction engine if compared to a conventional enclosed conveyor.

## Description

### TECHNICAL FIELD

The present invention refers to an enclosed conveyor for bulk material comprising an enclosure having on its interior a roller capable of supporting a transport portion of a conveyor belt and an air support system capable of supporting a return portion of said conveyor belt.

### STATE OF THE ART

Currently, conventional enclosed conveyors for bulk materials, as for example, grains, pellets, or woodchips, by a conveyor belt disposed over a set of rollers are already known. In a conventional enclosed conveyor, as the one found on the patentary document US6044965, the conveyor belt is protected against adverse climatic conditions by an enclosure, formed by a plurality of intermediate modules with different lengths, with said intermediate modules having side walls mounted on a bottom plate and a cover disposed over said side walls, by a return module, having a return roller, disposed on one extremity, and by a traction module disposed on the opposite extremity, with said traction module having a traction engine cooperating with a traction roller responsible for moving said conveyor belt.

Notice that the conventional enclosed conveyor presented in US6044965 is formed by a plurality of intermediate modules along its longitudinal extension and that each module have on its interior a plurality of sets of rollers, with each set of rollers being formed by a horizontal roller and two inclined rollers. Alternatively, document US6044965 also presents a configuration of a conventional enclosed conveyor, where spool-type rollers are used replacing the set of rollers.

Also in the conventional enclosed conveyor, a transport portion of the enclosed conveyor, portion where the bulk material is kept and transported until the final destination, is supported by a plurality of set of rollers, or by plurality of spool-like rollers, and the return portion of the conveyor belt, portion that does not have bulk material to be transported, is supported by the bottom plate of the enclosure, with said return portion disposed over an inner surface of the bottom plate. In order to decrease the friction between the inner surface of the bottom plate and the return portion of the conventional conveyor belt of the conventional enclosed conveyor, said bottom plate comprises a low-friction polymeric material coating, as, for example, ultra-high-molecular-weight (UHMW) polyethylene, disposed over the inner surface facing the interior of the enclosure. Thus, the friction between the return portion of the conveyor belt and the inner surface of the bottom plate of the enclosure, which is usually made of steel, is reduced.

However, even using a coating to decrease the friction between the return portion of the conveyor belt and the inner surface of the bottom plate of the conventional enclosed conveyor, the use of a traction engine with high potency is still necessary to duly traction said conveyor belt. Consequently, by using a traction engine with high potency, the use of traction pulleys with wider diameter and a higher pre-tension load is also necessary to ensure that no slipping from the belt occurs when tractioned by the traction pulley. Thus, the length of the conventional enclosed conveyor is restricted, as the longer the length of said enclosed conveyor, the larger the contact surface between the inner surface of the bottom plate and, consequently, the higher will be the necessary potency for the traction engine to overcome the friction force generated by the return portion of said conveyor belt.

In order to solve the inconveniences of the conventional enclosed conveyor, there are already alternate enclosed conveyors present in the state of the art, as, for example, the conveyor of the patentary document JPH10218327, where the conveyor belt is supported by an air film, in order to dramatically decrease the friction between said conveyor belt and the components that support both the transport portion and the return portion of said conveyor belt. Particularly, JPH10218327 also comprises, only in the module destined to feed the bulk material to be transported, a set of rollers mounted on the side walls of the enclosure of the alternate enclosed conveyor, which is responsible for dampening the fall of such bulk material during the feeding and, consequently, for avoiding damages to the air film generation system. During the remaining pathway, the conveyor belt is supported by an air film coming from holes cooperating with air ducts located below the conveyor belt, both in the transport portion and the return portion.

### TECHNICAL PROBLEM

However, the alternate enclosed conveyor of the state of the art that uses an air film to support the conveyor belt in the transport portion and the return portion has inconveniences when the bulk material distribution is unequal along the length of said conveyor belt. In this case, the bulk material is being accumulated in higher quantity in some points of the conveyor belt, generating higher pressure in such points. Thus, the transport portion of the conveyor belt makes contact with the surface where said transport portion moves on, increasing the friction coefficient between the conveyor belt and the bottom surface of the conveyor, causing the potency of the traction engine to increase. Furthermore, the contact of the conveyor belt on the surface where the transport portion moves on might cause a premature wear of said conveyor belt on the points where there is a higher accumulation of bulk material.

### SUMMARY OF THE INVENTION

Aiming to solve the inconveniences of the state of the art, the present invention proposes an enclosed conveyor that comprises an enclosure formed by a plurality of side walls disposed on a bottom plate and having a cover disposed over said side walls, with said bottom plate having an inner surface facing the interior of the enclosure and an outer surface facing the exterior of the enclosure. The proposed enclosed conveyor comprises at least a horizontal roller disposed on the interior of the enclosure and mounted on the side walls of said enclosure and a conveyor belt that comprises a transport portion disposed over said roller and a return portion disposed over the bottom plate.

The enclosed conveyor of the present invention is characterized by comprising at least one air duct disposed on the outer surface of the bottom plate, with said bottom plate having a plurality of holes longitudinally disposed along the bottom plate, in order to enable an airflow between the interior of said air duct and the interior of the enclosure.

In a presented embodiment, the proposed enclosed conveyor comprises a plurality of air ducts, with each air duct having a linkage opening and a linkage duct cooperating with the linkage openings of consecutive air ducts.

Thus, the proposed enclosed conveyor comprises a distinctive configuration if compared with the conventional enclosed conveyor and with the alternate enclosed conveyor, with the transport portion of the conveyor belt supported by at least a horizontal roller and the return portion of said conveyor belt supported by an air film, where said air film is formed between the inner surface of the bottom plate and the return portion.

Advantageously, the return portion of the conveyor belt of the proposed enclosed conveyor is supported by an air film. Thus, the friction between the inner surface of the bottom plate and the return portion of the conveyor belt is dramatically decreased compared to the configuration used by the conventional enclosed conveyor. Therefore, it is possible to use a traction engine with lower potency, as there is no more potency requirement demanded by the friction force existing in the return portion of the conveyor belt of the conventional enclosed conveyor. Furthermore, the possibility for the conveyor belt to slip due to the lower potency to start the traction engine of the proposed enclosed conveyor compared to the engine of the conventional enclosed conveyor is reduced. By using a traction engine with lower potency, the energy consumption of the proposed enclosed conveyor, as well as the diameter of the traction pulleys and the pre-tension load needed to turn the conveyor belt on, are also decreased.

Advantageously, with the configuration utilized in the proposed enclosed conveyor it is possible to manufacture said enclosed conveyor with a longer length compared to the length of the conventional enclosed conveyor, as the length restriction occurred due to the need for using a large traction engine and to its energy consumption, in order to overcome the friction force along the entire contact area between the return portion of the conveyor belt and the inner surface coated with UHMV of the bottom plate of said conventional enclosed conveyor.

Advantageously, by using at least one horizontal roller to support the transport portion of the conveyor belt as proposed by the present invention, it is possible to perform the bulk material transportation even if the distribution of said bulk material is unequally performed along said transport portion, as, therefore, said conveyor belt is not damaged by the higher accumulation of bulk material at specific points of the conveyor belt.

### BRIEF DESCRIPTION OF THE FIGURES

The invention will be better understood with the following detailed description, which will be interpreted with aid of the figures, that is:
Figure 1 presents a perspective view of the upper portion of an enclosed conveyor (10) for bulk material (100) of the present invention, with the representation of a module.
Figure 2 presents a perspective view of the upper portion of the enclosed conveyor (10) without representing the bulk material (100), the conveyor belt (30), and a cover (24).
Figure 3 presents a perspective view of the lower portion of the enclosed conveyor (10).
Figure 4 presents a frontal view of the enclosed conveyor (10), with the representation of the inner beams (71, 72, 73).
Figure 5 presents a frontal view of the enclosed conveyor (10) without representing the inner beams (71, 72, 73).
Figure 6 presents an upper view of the enclosed conveyor (10) without representing the cover (24), the bulk material (100), and the conveyor belt (30).
Figure 7 presents a perspective view of the lower portion of the enclosed conveyor (10), with the representation of three modules and a air duct (50).
Figure 8 presents a perspective view of the lower portion of the enclosed conveyor (10), with the representation of three modules and a plurality of air ducts (50) and linkage ducts (60).
Figure 9 presents a perspective view of the lower portion of the enclosed conveyor (10), with the representation of three modules and a plurality of air ducts (50) without the linkage ducts (60).

### DETAILED DESCRIPTION OF THE INVENTION

An enclosed conveyor (10) for bulk material (100) as proposed by the present invention is comprised by a plurality of interconnectable modules in its extremities by screwed unions, in order to enable a length adjustment for said enclosed conveyor (10) by the quantity of modules according to the desired application. The modules of the enclosed conveyor (10) might have different lengths, but present the same components and, therefore, the quantity of modules represented in each incorporation of the present description will be better described according to each embodiment presented.

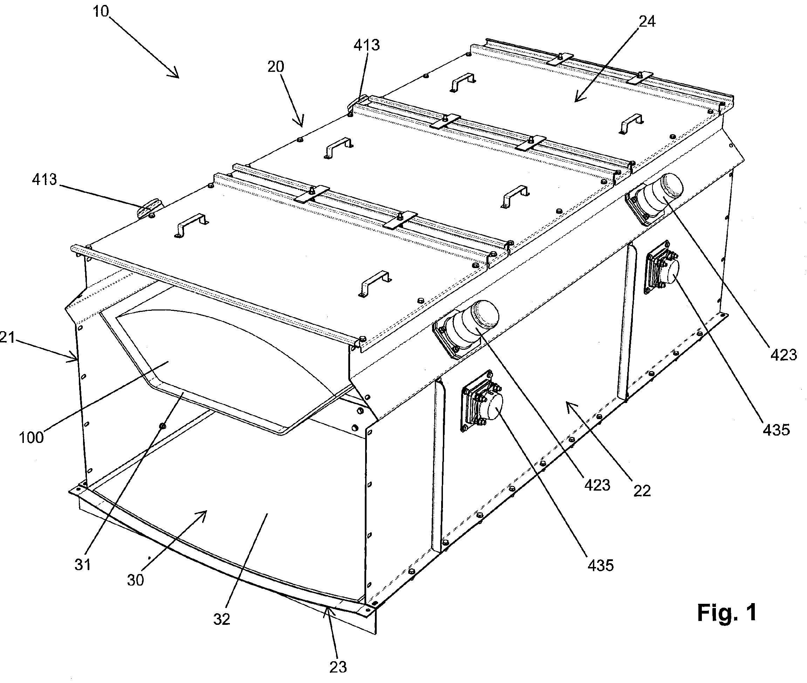

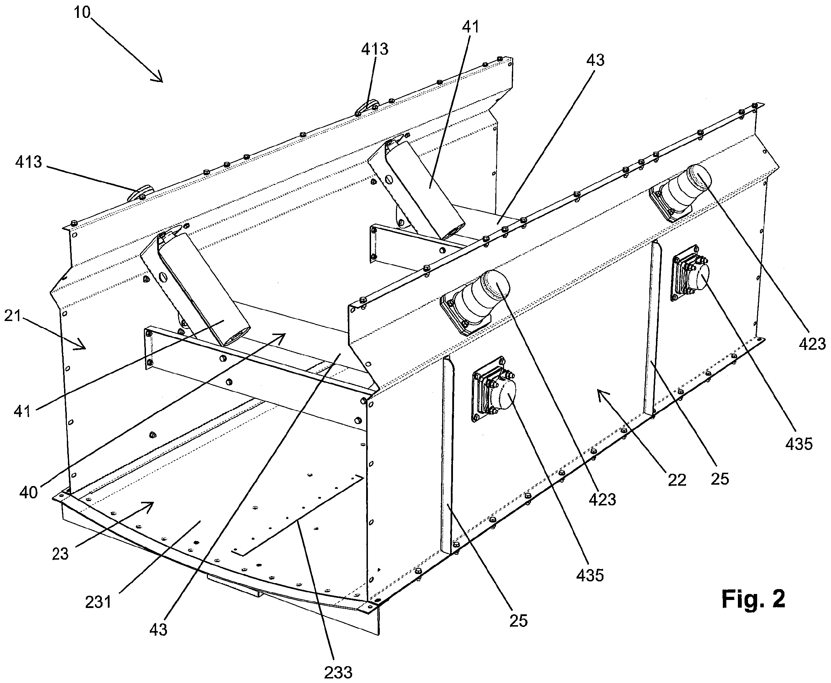

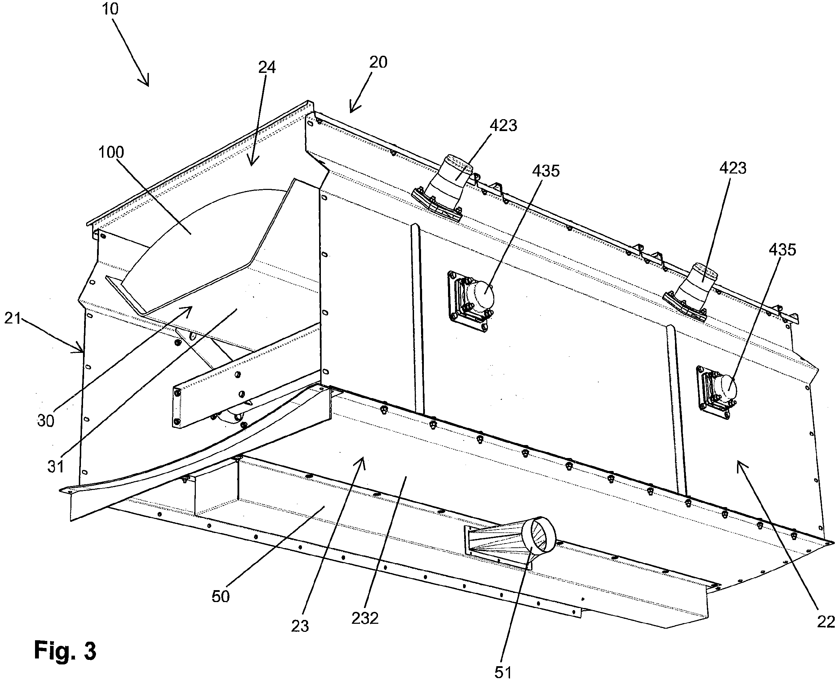

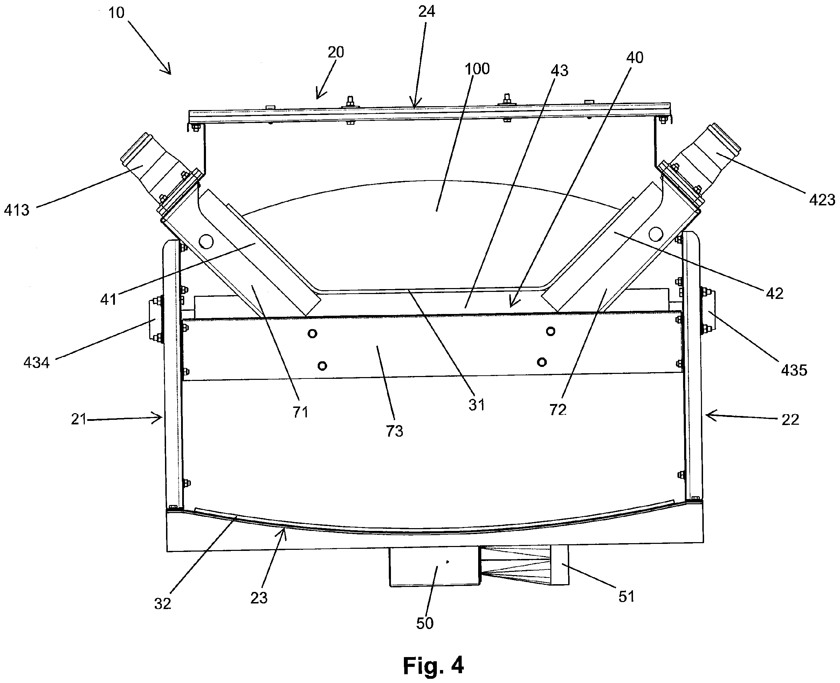

As it can be seen in Figures 1, 2, 3, and 4, the enclosed conveyor (10) of the present invention comprises an enclosure (20) formed by a plurality of side walls (21,22) disposed on the bottom plate (23) and have a cover (24) disposed over said side walls (21, 22), with said bottom plate (23) having an inner surface (231) facing the interior of the enclosure (20) and an outer surface (232) facing the exterior of the enclosure (20).

In a presented embodiment, the enclosed conveyor (10) comprises two side walls (21, 22). A first side wall (21) is mounted at one of the sides of the bottom plate (23), while a second side wall (22) is disposed at the opposite side of said bottom plate (23). The side walls (21, 22) are mounted at the lower plate (23) by a screwed union. Likewise, the cover (24), a component already belonging to the state of the art, is also screwed on the side walls (21, 22). Notice that, in Figures 1, 2, 3, and 4, only the side walls (21, 22) of a module of the enclosed conveyor (10) are being represented, however, when using more than one module, said side walls (21, 22) of said enclosed conveyor (10) might be interpreted as the union of the side walls (21, 22) of all modules. In the presented embodiment, and for each module of the enclosed conveyor (10), the cover (24) is represented by three covers screwed on the side walls (21, 22) of the enclosure (20).

The bottom plate (23) and the cover (24) are comprised by metallic plates in both documents of the state of the art and of the embodiment presented in the present invention.

In a presented embodiment, the bulk material (100) is transported inside the enclosure (20) of the enclosed conveyor (10) and the inner surface (231) of the bottom plate (23) faces the interior of said enclosure (20), while the outer surface (232) of such bottom plate (23) faces the exterior of the enclosure (20).

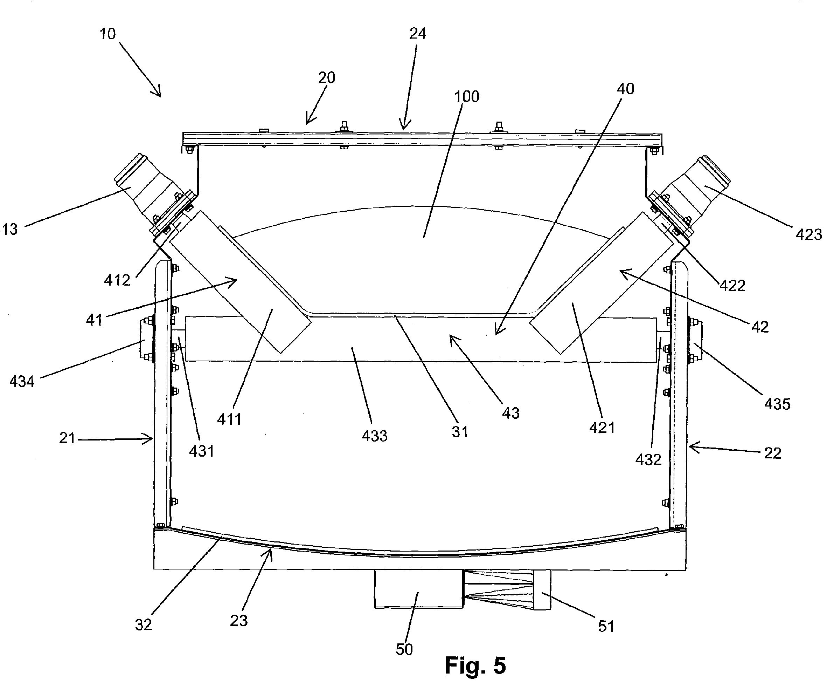

The proposed enclosed conveyor also comprises at least a horizontal roller (43) disposed in the interior of the enclosure (20) and mounted on the side walls (21, 22) of said enclosure (20) and a conveyor belt (30) that comprises a transport portion (31) disposed over the horizontal roller (43) and a return portion (32) disposed over the bottom plate (23), as it can be seen in Figure 5.

Notice that the described quantity of the horizontal roller (43) refers to a transversal section of the enclosed conveyor (10) and that the quantity of horizontal rollers (43) to be used along the longitudinal extension of said enclosed conveyor (10) must be defined according to the convenience and need, in order enable the transport portion (31) of the conveyor belt (30) to be duly supported by said horizontal rollers (43) during the transportation of the bulk material (100).

Also notice that the transport portion (31) of the conveyor belt (30) is the portion disposed over the horizontal rollers (43) of the enclosed conveyor (10), where the bulk material (100) is deposited while it is being transported. Once the bulk material (100) is discharged, the return portion (32) of the conveyor belt (30) returns from one of the extremities modules already described in the state of the art and then becomes disposed over the bottom plate (23) along the entire longitudinal extension of the enclosed conveyor (10), until arriving at the opposite extremity module, also already described in the state of the art, when it is then directed again over the horizontal rollers (43). Also notice that the return portion (32) of the conveyor belt (30) is supported over the inner surface (231) of the bottom plate (23) when the enclosed conveyor (10) is not working.

In a presented embodiment, the transport portion (31) of the conveyor belt (30) is disposed over a set of rollers (40) mounted inside the enclosure (20), with said set of rollers (40) being comprised by the horizontal roller (43) and a plurality of inclined rollers (41, 42) mounted on the side walls (21, 22). In the presented embodiment, each represented module of the enclosed conveyor (10) has two sets of rollers (40), with each set of rollers (40) comprising two inclined rollers (41, 42) and one horizontal roller (43).

A first inclined roller (41) is mounted on the first side wall (21), a second inclined roller (42) is mounted on the second side wall (22), and the horizontal roller (43) has an extremity mounted on the first wall side (21) and another extremity mounted on the second side wall (22).

In a presented embodiment, and according to the already knowledge already present in the state of the art, the inclined rollers (41, 42) are comprised by a cylindrical body (411, 421) having a shaft (412, 422) coupled at one extremity, while the horizontal roller (43) is comprised by a cylindrical body (433) having shafts (431, 432) coupled at each extremity.

As it is also already known in the state of the art, the shaft (412) of the first inclined roller (41) passes through the first side wall (21) and cooperates with a first outer bearing (413) mounted on said first side wall (21) and outside the enclosure (20) of the enclosed conveyor (10).

Similarly, the shaft (422) of the second inclined roller (42) passes through the second side wall (22) and cooperates with a second outer bearing (423) mounted on said second side wall (22) and outside the enclosure (20) of the enclosed conveyor (10).

Also similarly, one of the shafts (431) of the horizontal roller (43) passes through the first side wall (21) and cooperates with a third outer bearing (434) mounted on said first side wall (21) and outside the enclosure (20) of the enclosed conveyor (10), while the other shaft (432) of the horizontal roller (43) passes through the second side wall (22) and cooperates with a fourth outer bearing (435) mounted on said second side wall (22) and outside the enclosure (20) of the enclosed conveyor (10).

As described, the bearings (413, 423, 434, 435) of the rollers of the proposed enclosed conveyor (10) are mounted outside the enclosure (20) of said enclosed conveyor (10), however, in a non-represented embodiment, said bearings (413, 423, 434, 435) might be mounted inside said enclosure (20).

In a non-represented configuration, the enclosed conveyor (10) comprises spool-like rollers, already previously described in the state of the art document, replacing the set of rollers (40) to support the transport portion (31) of the conveyor belt (30).

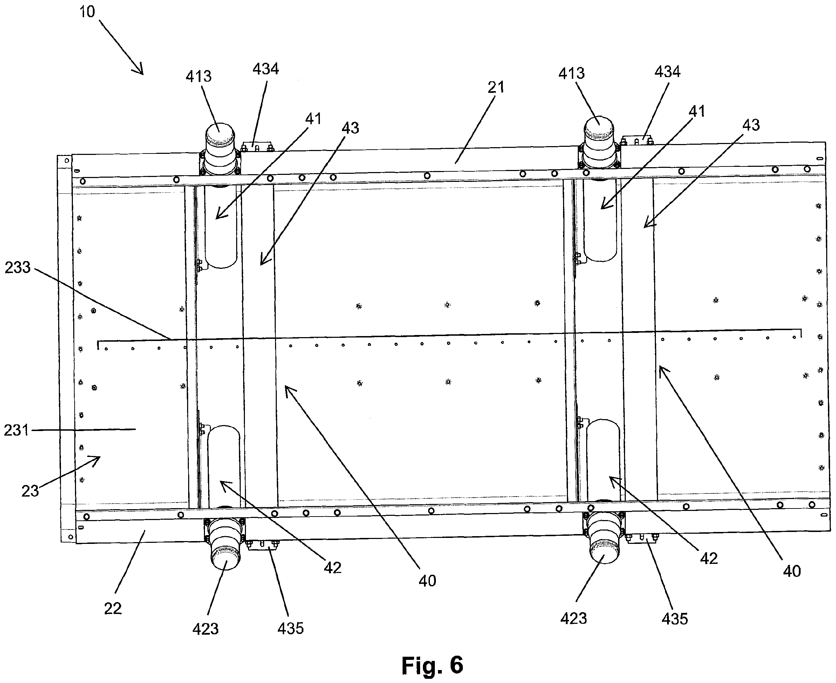

The enclosed conveyor (10) of the present invention is characterized by comprising at least one air duct (50) disposed on the outer surface (232) of the bottom plate (23) of said enclosed conveyor (10), with said bottom plate (23) having a plurality of holes (233) longitudinally disposed along said bottom plate (23) in order to enable an airflow between the interior of said air duct (50) and the interior of the enclosure (20), as it can be better seen in Figure 6.

In a presented embodiment, the holes (233) are longitudinally disposed along the enclosed conveyor (10) at a central region of the bottom plate (23). Notice that, for the correct functioning of the invention, the air duct (50) is also disposed at a central region of the outer surface (232) of the bottom plate (23), in order to cause the holes (233) of said bottom plate (23) to be disposed into the width delimitations of said air duct (50). Thus, becomes possible the passage of the airflow that passes inside the air duct (50) to the interior of the enclosure (20) through the holes (233) of the bottom plate (23).

In a presented embodiment, the air duct (50) is comprised by a metallic plate with a U-shaped transversal section and is disposed on the outer surface (232) of the bottom plate (23) by a screwed union, with said air duct (50) being closed in both extremities. Alternatively, the air duct (50) can be soldered on the outer surface (232) of the bottom plate (23). Notice that the air duct (50) needs to be mounted on the same region where the holes (233) of the bottom plate (23) are disposed.

In a non-presented embodiment, instead the "U" shape, the air duct (50) is composed by a closed rectangular section. In this case, both the bottom plate (23) and the air duct (50) surface that makes contact with the outer surface (232) of said bottom plate (23) need to present cooperating holes between themselves in order to enable the airflow passage indisde said air duct (50) to the interior of the enclosure (20).

In a presented incorporation, the air duct (50) comprises an air opening (51), where an airflow-generating source, such as, for example, a fan, can be coupled to, in order to generate an airflow along the entire extension of said air duct (5) capable to be directed to the interior of the enclosure (20) of the enclosed conveyor (10) through the holes (233) of the bottom plate (23).

Notice that, in the presented embodiment, the air opening (51) of the air duct (50) is comprised by a component separated from said air duct (50); however, said air opening (51) can be comprised by at least one opening disposed on any region of said air duct (50).

The quantity of air openings (51) and airflow-generating sources needs to be sized according to the desired function parameters for the enclosed conveyor (10). A person skilled in the art must be able to calculate the needed airflow demand for the correct function of the enclosed conveyor (10), in order to cause the return portion (32) of the conveyor belt (30) to be duly supported. In a plausible, but non-represented, configuration, a fan actuated by a 2hp engine might be used for each air opening (51) in an interval of every 30 meters.

Thus, when the enclosed conveyor (10) is functioning, at the time when the airflow passes through the holes (233) of the bottom plate (23) directed to the interior of the enclosure (10), said airflow meets the return portion (32) of the conveyor belt (30) disposed on the inner surface (231) of said bottom plate (23).

Due to the weight of the return portion (32) of the conveyor belt (30), the airflow coming from the holes (233) of the bottom plate (23) is forced to bypass such return portion (32) in the direction of the lateral borders of said conveyor belt (30). Therefore, an air film is formed between the inner surface (231) of the bottom plate (23) and the return portion (32) of the conveyor belt (30), in order to enable the weight of said return portion (32) to be supported by said air film. Notice that, under normal functioning conditions of the enclosed conveyor (10), the return portion (32) of the conveyor belt (30) does not make contact with the inner surface (231) of the bottom plate (23), as there is no bulk material (100) pressing said return portion (32) down. However, there might be situations when a momentary contact occurs, as, for example, due to an unlevelling of the bottom plate (23).

Advantageously, the return portion (32) of the conveyor belt (30) of the proposed enclosed conveyor (10) is supported by an air film. Thus, the fritcion between the inner surface (231) of the bottom plate (23) and the return portion (32) of the conveyor belt (30) is dramatically decreased compared to the configuration used by the conventional enclosed conveyor.

Advantageously, with the configuration used in the proposed enclosed conveyor (10) is possible to manufacture said enclosed conveyor (10) at a longer length compared to the conventional enclosed conveyor, as the length restriction was caused by the need for using a large traction engine with large energy consumption, traction pulleys with large diameter, and very high pre-tension loads to overcome the friction force along the entire contact area between the return portion of the conveyor belt and the UHMW-coated inner surface of the bottom plate of said conventional enclosed conveyor.

Advantageously, by using at least one horizontal roller (43) to support the transport portion (31) of the conveyor belt (30) of the enclosed conveyor (30) as proposed by the present invention, it is possible to transport the bulk material (100) even if the distribution of said bulk material (100) is unequally distributed along said transport portion (31), as, therefore, said conveyor belt (30) is not damaged by the higher accumulation of bulk material (100) at specific points of the conveyor belt (30).

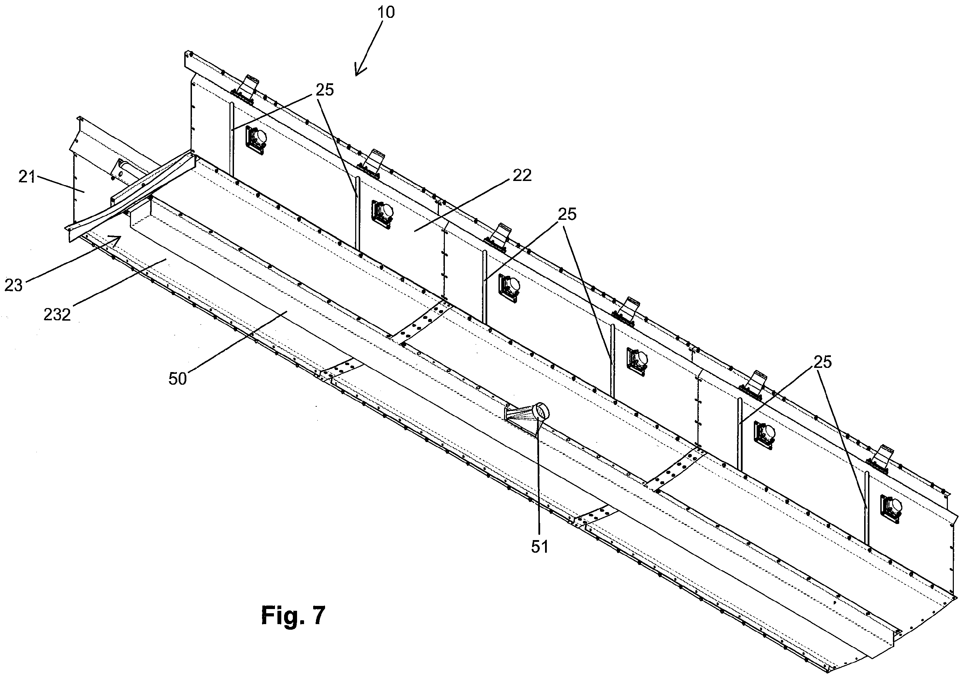

As it can be seen in Figure 7, the invention described until now sets the use of an air duct (50) along the entire enclosed conveyor (10). In other words, a single air duct (50) is mounted at the outer surface (232) of the bottom plate (23) of all the modules that compose the enclosed conveyor (10). Three intermediate modules of the enclosed conveyor (10) are represented in the embodiment presented in Figure 7, with the air duct (50) cooperating with the bottom plate (23) of all said modules.

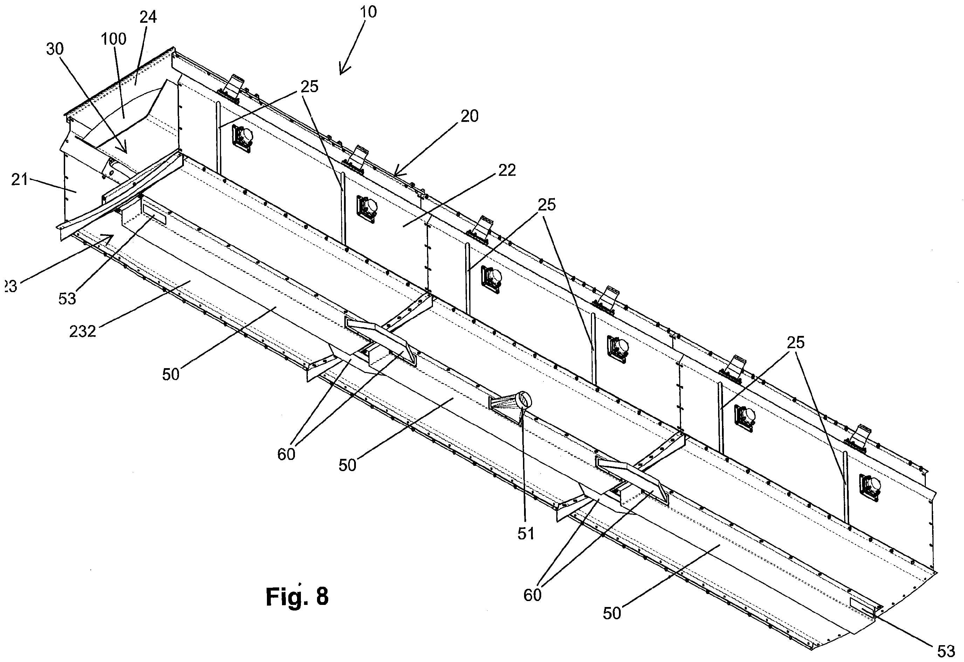

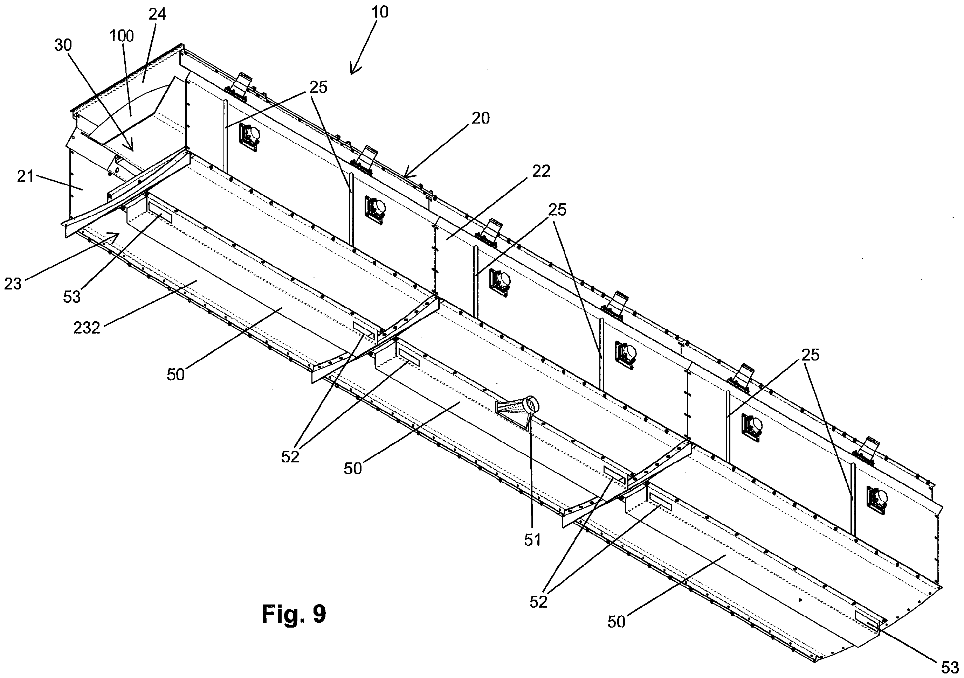

In other presented embodiment, and as it can be seen in Figures 8 and 9, the enclosed conveyor (10) comprises a plurality of air ducts (50), with each air duct (50) having at least one linkage opening (52) and one linkage duct (60) cooperating with the linkage openings (52) of consecutive air ducts (50). Therefore, more than one air duct (50) might be used along the longitudinal extension of the enclosed conveyor (10), with said air ducts (50) being interconnected by the linkage ducts (60). The linkage ducts (60) might be screwed at the linkage openings (52) of the air ducts (50)

Also in the presented embodiment, each module of the enclosed conveyor (10) comprises one air duct (50) mounted at the outer surface (232) of the respective bottom plate (23). Thus, the holes (233) on the bottom plate (23) of each module of the enclosed conveyor (10) cooperate with the respective air duct (50) mounted on said module, in order to enable the airflow coming from the interconnected air ducts (5) to be directed to the interior of the enclosure (10). In other words, the air ducts (50) are individually mounted for each module of the enclosed conveyor (10).

Notice that, in a presented embodiment, the linkage ducts (60) cooperate to interconnect the air ducts (50) of consecutive modules. In other words, the linkage duct (60) is mounted at the linkage opening (52) of the air duct (50) of a module of the enclosed conveyor (10) and at the linkage opening (52) of the air duct (50) of the immediate neighboring module.

Advantageously, by using the air duct (50) individually mounted on each module of the enclosed conveyor (10), the mounting of consecutive modules is facilitated, as each module can be already previously pre-mounted with the respective air duct (50), with only the mounting of the linkage ducts (60) remaining to interconnect said air ducts (50). Thus, the module coupling and the sealing of possible air escapes from the system comprised by the air ducts (50) and by the linkage ducts (60) are facilitated.

Notice that, in the embodiment where a plurality of air ducts (50) are used, at least one air opening (51) disposed in any of said air ducts (50) is needed; however, more than one air opening (51) might be used. Thus, as the air ducts (50) of the proposed enclosed conveyor (10) are interconnected by linkage ducts (60), the airflow generation along the entire interior of said air ducts (50) is ensured.

In a presented embodiment, the air ducts (50) comprise a linkage opening (52) in each extremity in order to facilitate the mounting of the linkage ducts (60). Furthermore, one pair of linkage ducts (60) is used to perform the interconnection among the consecutive air ducts (50) in order to facilitate the airflow transition among said air ducts (50). Notice that the air ducts (50) disposed in the intermediate modules of the extremities of the enclosed conveyor (10) might only have one linkage opening (52) at one extremity or one linkage opening (52) in each extremity, with the linkage opening (52) that is not connected to a linkage duct (60) being closed by a screwed cover (53).

In a non-represented embodiment, one of the linkage openings (52) of the air ducts (50) might be used as an air opening (51), as, for example, the linkage openings (52) with the covers (53).

Preferentially, both the air ducts (50) and the linkage ducts (60) are manufactured with a galvanized steel plate. Thus, the air ducts (50) might be mounted at the outer surface (232) of the bottom plates (23) and the linkage ducts (60) might be mounted at the linkage openings (52) of said air ducts (50) by a screwed union, without needing to solder the cited components. Thus, the process of mounting the enclosed conveyor (10) is facilitated, as there is no need for painting the air ducts (50) and the linkage ducts (52), either to protect said ducts (50, 60) against bad weather or against the oxidation from the soldering process.

Additionally, the enclosed conveyor (10) might comprise a plurality of inner beams (71, 72, 73), mounted on the side walls (21, 22) and inside the enclosure (20) of the enclosed conveyor (10), and a plurality of lateral reinforcements (25) mounted on the side walls (21, 22) and outside said enclosure (20), in order to ensure a structural stability of said enclosed conveyor (10). Therefore, it is ensured that the enclosure (20) will not undergo deformations or buckling by the application of loads inherent to transporting the bulk material (100). Both the inner beams (71, 72, 73) and the lateral reinforcements (25) might be screwed or soldered at the side walls (21, 22).

The preferential or alternate embodiments here described are not able to limit the present invention to the structural forms, and, however, there might be constructive variations that are equal without leaving the scope of the invention protection.

## Claims

1. ENCLOSED CONVEYOR comprising
an enclosure (20) formed by a plurality of side walls (21, 22) disposed on a bottom plate (23) and having a cover (24) disposed on said side walls (21, 22), with said bottom plate (23) having an inner surface (231) facing the interior of said enclosure (20) and an outer surface (232) facing the exterior of said enclosure (20);
at least one horizontal beam (43) disposed inside the enclosure (20) and mounted on the side walls (21, 22) of said enclosure (20);
a conveyor belt (30), comprising a transport portion (31) disposed over the beam (43) and a return portion (32) disposed over the inner surface (231) of the bottom plate (23); **characterized by**
comprising at least one air duct (50) disposed on the outer surface (232) of the bottom plate (23) of the enclosed conveyor (10), with said bottom plate (23) having a plurality of holes (233) longitudinally disposed along said bottom plate (23) in order to enable an airflow between the interior of the air duct (50) and the interior of the enclosure (20).

2. ENCLOSED CONVEYOR according to claim 1, **characterized by** comprising a plurality of air ducts (50), with each air duct (50) having at least one linkage opening (52), and linkage duct (60) cooperating with the linkage openings (52) of consecutive air ducts (50).

3. ENCLOSED CONVEYOR according to claim 1 or 2, **characterized by** at least one air duct (50) comprising an air opening (51).
